# EUROPÄISCHE PATENTSCHRIFT

(11) **EP 1 491 420 B1**
(45) Veröffentlichungstag und Bekanntmachung des Hinweises auf die Patenterteilung: **09.03.2011**
(21) Anmeldenummer: 04014877.7
(22) Anmeldetag: 24.06.2004
(51) Int. Cl.: B62B 7/04

(54) **Kinderwagen mit gegen ein elastisches Rückstellelement verschwenkbaren Rädern**
Pram with wheels swivelling against an elastic biasing element
Poussette dont les roues pivotent avec un élément élastique de rappel

(30) Priorität: 27.06.2003 DE 10329092
(43) Veröffentlichungstag der Anmeldung: 29.12.2004
(73) Patentinhaber: HAUCK GmbH & Co. KG, 96242 Sonnefeld (DE)
(72) Erfinder: Feyler, Beantrice, 96242 Sonnefeld (DE)
(74) Vertreter: Raffay & Fleck

(56) Entgegenhaltungen:
- DE-A1- 2 942 390
- DE-A1- 19 940 779
- US-A- 5 355 664

## Beschreibung

Die Erfindung betrifft einen Kinderwagen gemäß dem Oberbegriff des Anspruches 1.

Kinderwagen sind in der Regel durch ein Fahrgestell gekennzeichnet, welches aus in zwei parallelen senkrechten Ebenen aneinander angelenkten, zum Teil scherenartig angeordneten Gestellholmen und einem U-förmigen Schieber besteht, wobei entsprechende Gestellholme der beiden Ebenen jeweils ein Paar bilden. Für einen komfortablen Transport des Kinderwagens beispielsweise im Kofferraum eines Autos kann der Kinderwagen zusammenfaltbar sein. Des weiteren umfassen die bekannten Kinderwagen sehr häufig einen Aufsatz, der eine Sitzfläche und eine Rückenlehne oder eine Liegeschale definiert. Um das Fahrverhalten des Kinderwagens zu verbessern, d.h. um Kurvenfahrten zu erleichtern, sind bei den meisten bekannten Kinderwagen die vorderen Räder jeweils um eine vertikale Achse schwenkbar gelagert.

Die Schwenkbarkeit der Räder, die auf festem Untergrund, wie beispielsweise auf geteerten oder anderweitig befestigten Wegen, eine benutzerfreundliche und komfortable, mit einem geringen Kraftaufwand des Benutzers verbundene Kurvenfahrt ermöglicht, weist bei weichem Untergrund, in den die Räder einsinken können, wie z.B. auf Kieswegen oder nassen, aufgeweichten Böden, Nachteile für den Benutzer des Kinderwagens auf. Sobald die Räder in Kies, losem Erdreich, schlammigem Untergrund oder dgl. einsinken, erfordern die verschwenkbaren Räder einen zusätzlichen Kraftaufwand des Benutzers, da durch das Erdreich oder den Kies, der die Räder des Kinderwagens umgibt, die Räder sehr leicht ungewollt ausgelenkt werden. Eine Geradeausfahrt auf widrigem Untergrund bedeutet also einen großen Kraftaufwand des Benutzers.

DE 29 42 390 A1 offenbart einen Kinderwagen gemäß dem Oberbegriff des Anspruchs 1.

Aufgabe der vorliegenden Erfindung ist es, einen lenkbaren Kinderwagen anzugeben, der auf widrigen Untergründen, wie z.B. Kiesböden oder weichen Böden, ein ansprechendes Fahrverhalten zeigt, was bedeutet, daß eine Untergrund-bedingte ungewollte Auslenkung der Räder bei einem erfindungsgemäßen Kinderwagen verringert bzw. verhindert wird.

Diese Aufgabe wird durch die kennzeichnenden Merkmale der Ansprüche 1 und/oder 3 gelöst. Ein wesentlicher Punkt der vorliegenden Erfindung liegt also darin, daß die verschwenkbar gelagerten Räder entgegen der Wirkung eines elastischen Rückstellelements, insbesondere einer Feder (Torsionsfeder) aus einer Geradeausstellung auslenkbar sind. Bei Verwendung eines erfindungsgemäßen Kinderwagens auf widrigem Untergrund können die Räder einerseits nicht mehr so einfach ungewünscht aus einer Geradeaus-Stellung ausgelenkt werden, anderseits werden sie, falls es doch zu einer ungewünschten Auslenkung kommt, sobald die Ursache für die Auslenkung nicht mehr vorhanden ist, automatisch wieder in eine Geradeaus-Stellung zurück gebracht. Eine Erleichterung bei der Bewältigung des o.g. Problems kann konstruktiv dadurch erreicht werden, daß der Auslenkwinkel der verschwenkbar gelagerten Räder unterschiedlich einstellbar ist, und zwar entweder stufenweise oder stufenlos. Diese Konstruktion ist sowohl in Verbindung mit dem elastischen Rückstellelement als auch unabhängig davon vorteilhaft.

In einer bevorzugten Ausführungsform sind die verschwenkbar gelagerten Räder in Geradeausstellung blockierbar. Bei Fahrten durch unwegsames Gelände bzw. auf besonders widrigen Untergründen kann dadurch in einfacher Art und Weise eine geradeaus gerichtete Fahrt des Kinderwagens erzielt und eine unerwünschte Auslenkung der Räder unterbunden werden.

In einer weiteren bevorzugten Ausführungsform sind die verschwenkbar gelagerten Räder bei Bedarf vom elastischen Rückstellelement entkoppelbar. Wird der erfindungsgemäße Kinderwagen auf befestigtem Untergrund, wie z.B. einem geteerten Weg, benutzt, so ist es möglich, die Räder vom elastischen Rückstellelement zu entkoppeln, was eine Kurvenfahrt ohne die rückstellende Wirkung des elastischen Elements ermöglicht. Sobald der Untergrund schlechter wird und die rückstellende Wirkung des Rückstellelements gewünscht wird, können die Räder wieder an selbiges angekoppelt werden.

Vorzugsweise sind die verschwenkbar gelagerten Räder bei maximal eingestelltem Auslenkwinkel oder einer vorbestimmten Zwischenstellung desselben vom elastischen Rückstellelement entkoppelt. Damit läßt sich, bei einer Fahrt mit maximal eingestelltem Auslenkwinkel, d.h. in einem Fall, in dem anzunehmen ist, daß der Untergrund eben und befestigt ist, erreichen, daß der Benutzer des Kinderwagens diesen mit geringem Kraftaufwand lenken kann. Wird ein kleinerer Auslenkwinkel eingestellt, so werden die Räder an das elastische Rückstellelement angekoppelt. Dies erleichtert dem Benutzer des Kinderwagens eine Fahrt über widrigen Untergrund. Alternativ können die verschwenkbar gelagerten Räder auch bei einer vorbestimmten Zwischenstellung des eingestellten Auslenkwinkels vom elastischen Rückstellelement entkoppelt sein.

In einer besonders einfachen konstruktiven Ausführung weist die vertikale Schwenkachse eines verschwenkbaren Rades eine Rastaufnahme auf, in die bei vorbestimmter Schwenkstellung bzw. Auslenkung, insbesondere bei Geradeausstellung des Rades, ein Verriegelungselement eingreifbar ist, wobei das Verriegelungselement mit einem Betätigungsorgan gekoppelt ist. Bei dem Betätigungsorgan kann es sich beispielsweise um einen Kipphebel oder aber auch um ein Pedal handeln; die Kopplung zwischen Rastvorsprung und Betätigungsorgan kann durch ein Betätigungsgestänge erfolgen.

Vorzugsweise weist das Schwenklager eines schwenkbar gelagerten Rades ein Gehäuse und eine darin drehbar gelagerte Scheibe auf. Mit der drehbar gelagerten Scheibe ist ein Achshalter verbunden, an dem wiederum die Radachse befestigt ist, und zwar etwa um 90° zur vertikalen Schwenkachse des Rades gerichtet. Das Gehäuse des Schwenklagers dient bei dieser Ausführungsform vorzugsweise als Radialführung für das Verriegelungselement, wobei das Verriegelungselement in einer konstruktiv einfachen Ausführung ein in radialer Richtung hin- und herschiebbarer Riegel ist.

Die Rastaufnahme für das Verriegelungselement ist vorzugsweise mit der drehbar gelagerten Scheibe verbunden, wobei die stationäre Abstützung des Verriegelungselements am Gehäuse des Schwenklagers erfolgt.

In einer weiteren bevorzugten Ausführungsform sind insbesondere die vorderen jeweils um eine vertikale Achse verschwenkbar gelagerten Räder durch einen Koppelstab miteinander verbunden derart, daß diese synchron verschwenken. Dadurch ist sichergestellt, daß die Räder in der Spur bleiben, und zwar sowohl bei Kurvenfahrt als auch Geradeausfahrt. Vorzugsweise ist der Koppelstab mit den Achshaltern der verschwenkbar gelagerten Vorder- und/oder Hinterräder verbunden.

In einer besonders einfachen und störunanfälligen Ausführungsform besitzt das Verriegelungselement eine Aufnahme für einen am Betätigungsgestänge angeordneten Zapfen, wobei die Aufnahme vorzugsweise als Schrägnut ausgebildet ist. Die Schrägnuten der Verriegelungselemente für ein Räderpaar bzw. die Räder einer Achse, nämlich Vorder- und/oder Hinterachse sind vorzugsweise relativ zur Wagenlängsachse gespiegelt. Mit anderen Worten: Die Schrägnut eines einem linken Rad zugeordneten Verriegelungselements erstreckt sich in Draufsicht von hinten außen nach vorne innen, während sich die Schrägnut des dem rechten Rad zugeordneten Verriegelungselements unter demselben vorgegebenen Winkel von hinten außen nach vorne innen erstreckt. Die Schrägnuten sind also von hinten nach vorne aufeinander zu gerichtet.

Nachstehend wird eine bevorzugte Ausführungsform eines erfindungsgemäßen Kinderwagens anhand der beigefügten Zeichnungen näher erläutert. Diese zeigen in:
- Fig. 1: einen erfindungsgemäß ausgebildeten Kinderwagen von vorne;
- Fig. 2: einen vorderen Holm eines Kinderwagens mit Teilen einer Rückstell- und Auslenkwinkel-Verstelleinrichtung
- Fig. 3: eine Rückstell- und Auslenkwinkel-Verstelleinrichtung für einen Kinderwagen in Explosionszeichnung;
- Fig.4: die Rückstell- und Auslenkwinkel-Verstell-Einrichtung aus Fig. 3, jedoch um 90° gedreht
- Fig. 5: die Einrichtung der vorangehenden Figuren in "Entriegelungsstellung"
- Fig. 6: die Einrichtung der vorangehenden Figuren in "Blockierstellung"

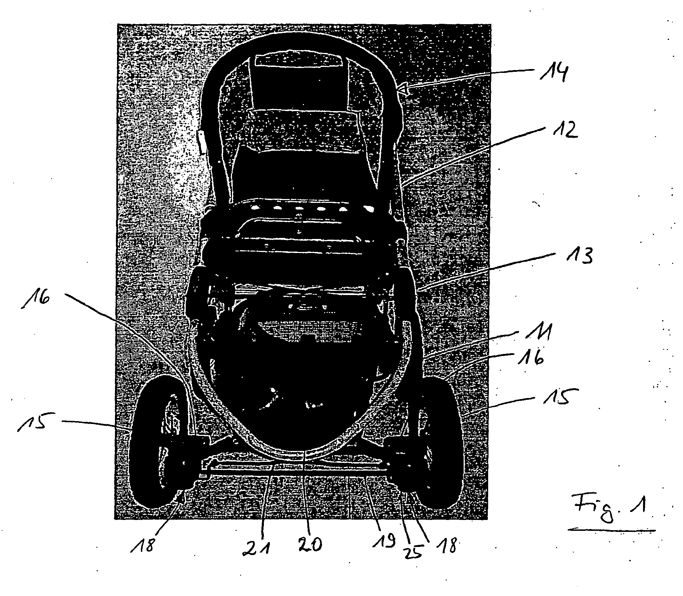

Der in Fig. 1 dargestellte Kinderwagen umfaßt eine Rahmenkonstruktion, die sich aus einem vorderen und einem hinteren U-förmigen Holm 11 und 12 zusammensetzt, wobei die beiden Holme mit ihren freien Schenkelenden einander zugekehrt mit einem Verbindungselement 13 aneinander montiert sind. Zwischen den Schenkeln der beiden Holme ist ein Aufsatz 14 mit einer Sitzfläche und einer Rückenlehne positioniert. Die Vorderräder 15 sind an sich nach hinten erstreckenden Achshaltern 16 drehbar gelagert. Die Achshalter 16 sind jeweils um eine vertikale Achse (Schwenkachse) schwenkbar. Zu diesem Zweck sind die Achshalter 16 mit einer Schwenkscheibe verbunden, die innerhalb eines Schwenklagergehäuses 25 um eine vertikale Achse über einen vorbestimmten Winkelbereich verschwenkbar gelagert ist. Die Achshalter erstrecken sich dabei durch ein Gehäusefenster hindurch. Des weiteren sind sie durch einen Koppelstab 19 miteinander verbunden, so daß die Räder synchron verschwenkbar sind.

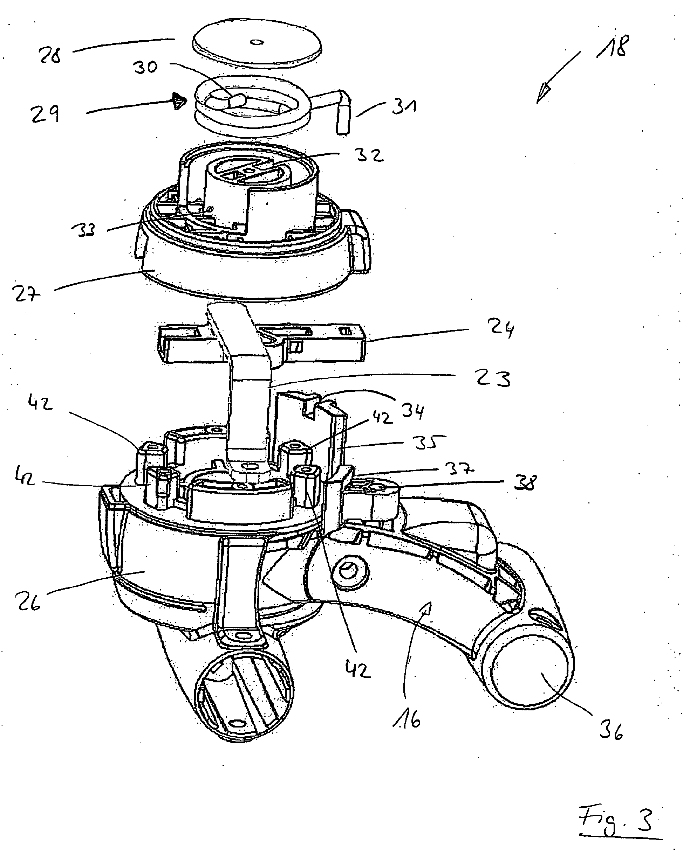

An der Vorderseite des vorderen Holms 11 ist ein Betätigungsorgan in Form eines Pedals 20 angebracht, das um eine Achse, die sich etwa in der Mitte des Pedals in Längsrichtung des Kinderwagens erstreckt, nach rechts oder links gekippt werden kann. Das Pedal 20 steht über eine Zunge 22 mit einem Betätigungsgestänge 21 in Wirkeingriff. Am freien Ende der Zunge 22 ist ein Langloch ausgebildet, und zwar in Zungenlängsrichtung, in das ein am Gestänge 21 ausgebildeter Zapfen eingreift. Wird das Pedal 20 in die eine oder andere Richtung gekippt, so bewegen sich auch die Zunge 22 und das Betätigungsgestänge 21 dementsprechend mit. Das Betätigungsgestänge 21, dessen Enden 23 im Gehäuse 25 der Schwenklager 18 jeweils mit einem weiter unten genauer beschriebenen Verriegelungselement in Form eines Riegels 24 (vgl. Fig. 3-6) in Wirkeingriff stehen, bewegt sich in etwa parallel zum Koppelstab 19, je nach Kipprichtung des Pedals nach links oder rechts. Bewegt sich das Betätigungsgestänge nach rechts (was einer Pedalbewegung nach links entspricht), so wird das rechte Ende 23 des Betätigungsgestänges 21 noch etwas weiter in das rechte Schwenklagergehäuse 25 hineinbewegt, während das linke Ende 23 des Betätigungsgestänges 21 aus dem linken Schwenklagergehäuse herausbewegt wird. Wird das Pedal nach rechts bewegt, so wird das Betätigungsgestänge 21 nach links bewegt, wobei das Betätigungsgestänge aus dem rechten Schwenklagergehäuse heraus- und in das linke Schwenklagergehäuse hineinbewegt wird.

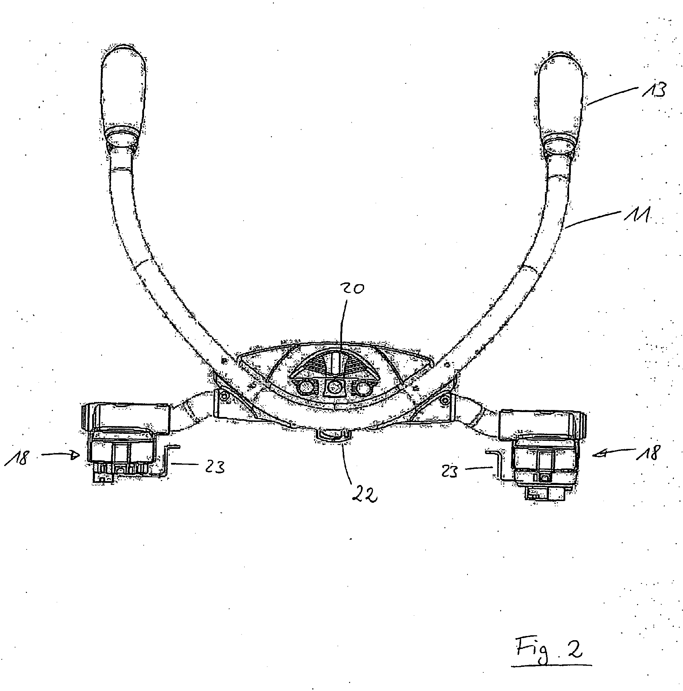

An dieser Stelle ist anzumerken, daß in Fig. 2 das links abgebildete Schwenklager 18 unten offen ist. Ebenso ist bis auf die freien Enden 23 das Betätigungsgestänge 21 aus Übersichtlichkeitsgründen nicht dargestellt.

In Fig. 3 ist ein Schwenklager 18 eines Vorderrades in Explosionszeichnung dargestellt. Das oben erwähnte Gehäuse 25 des Schwenklagers 18 setzt sich, wie aus Fig. 3 ersichtlich ist, aus drei Teilen zusammen, nämlich einem Schwenklageraufnahmeteil 26, in dem der Achshalter 16 schwenkbar gelagert ist, einem Gehäuseoberteil 27 und einem Deckel 28. Zwischen dem Gehäuseoberteil 27 und dem Deckel 28 ist eine Torsionsfeder 29 plaziert, die eine Rückstellung des zugeordneten Rades in eine Geradeaus-Stellung in folgender Art und Weise bewirkt: Die Torsionsfeder 29 besitzt ein inneres Ende 30 und ein äußeres Ende 31, wobei das innere Ende 30 der Torsionsfeder 29 in eine radiale Aussparung 32 des Gehäuseoberteils 27 eingreift. Das äußere Ende 31 der Torsionsfeder 29 erstreckt sich durch eine fensterartige Ausnehmung 33 in der Umfangswand des Gehäuseoberteils 27 hindurch radial nach außen und ist mit einer sich nach unten erstreckenden Abwinkelung versehen. Diese greift bzw. taucht in eine komplementäre Aussparung 24 am oberen Rand eines sich axial nach oben erstreckenden, und mit der Schwenkscheibe verbundenen Vorsprungs 35 ein. Am freien Ende des Achshalters 16 ist eine Aufnahmebohrung 36 für eine Radachse ausgebildet, die sich quer zur Schwenkachse des Schwenklagers 18 sowie quer zur Kinderwagenlängsachse erstreckt. Wird ein Rad 15 ausgelenkt, wird die in Geradeaus-Stellung nicht gespannte Torsionsfeder 29 durch die Auslenkung des äußeren Endes 31 gespannt, wodurch ein rückstellendes Moment erzeugt wird. Die Räder 15 des Kinderwagens werden demnach gegen die Wirkung der Torsionsfeder 29 aus der Geradeaus-Stellung ausgelenkt.

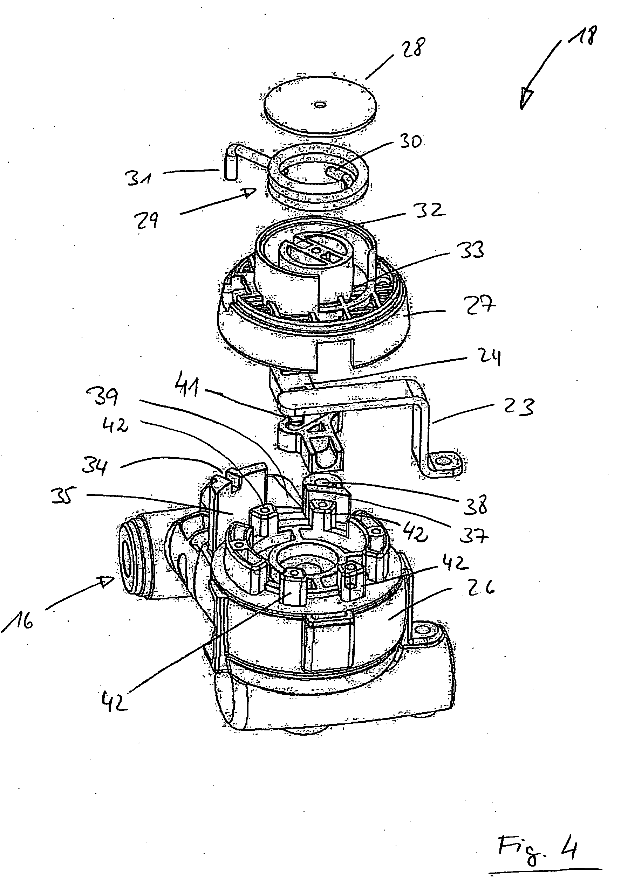

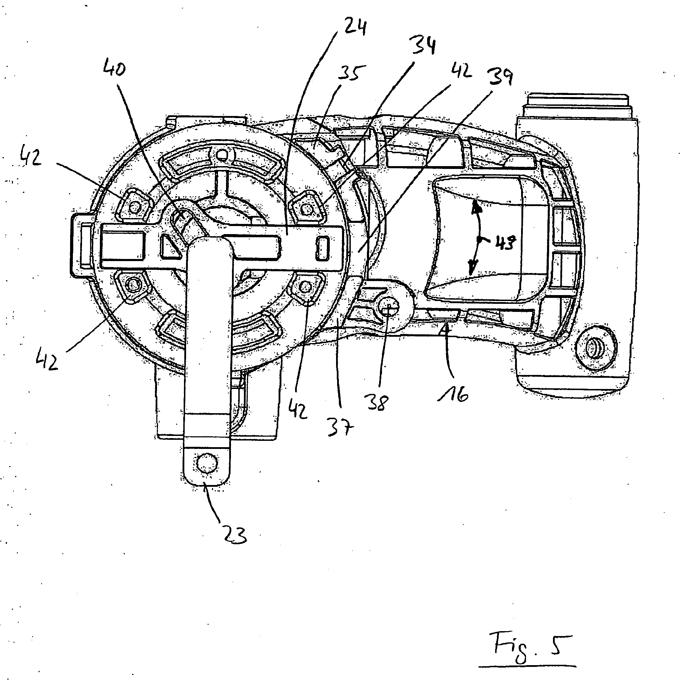

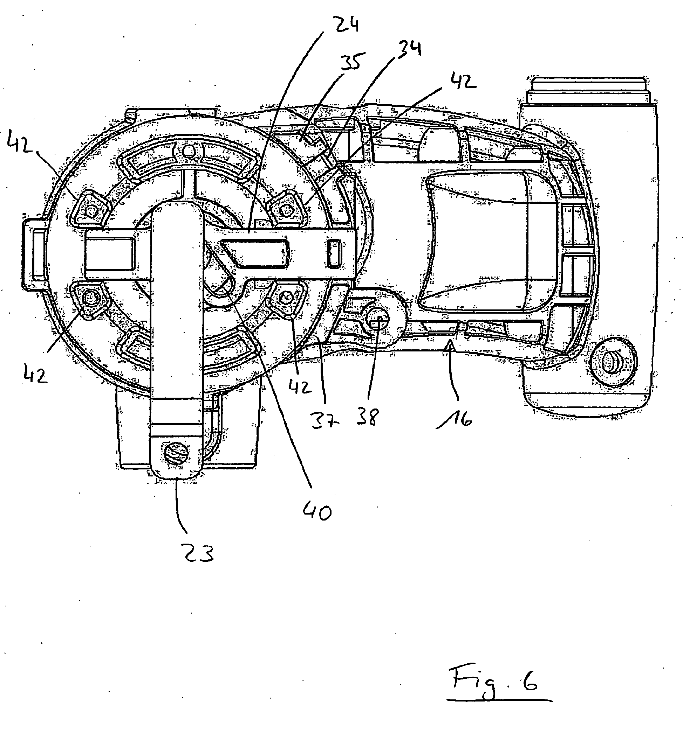

In einem vorbestimmten Winkelabstand vom Vorsprung 35 ist ein weiterer Vorsprung 37 an der mit dem Achshalter 16 verbundenen Schwenkscheibe ausgebildet, der eine Bohrung 38 zum Anschluß des Koppelstabes 19 besitzt. Die Vorsprünge 35 und 37 bilden zwischen sich eine Rastaufnahme 39 (vgl. Fig. 4) für den bereits erwähnten Riegel 24 derart, daß der Riegel 24 in die Rastaufnahme 39 hineingeschoben werden kann. Zum Verschieben des Riegels besitzt dieser eine Schrägnut 40 (vgl. Fig. 5 und 6), in die ein korrespondierender Zapfen 41 (Fig. 4) am freien Ende 23 des Betätigungsgestänges 21 eingreift. Durch eine Betätigung des Pedals wird, wie bereits weiter oben erwähnt, das Betätigungsgestänge 21 und damit insbesondere das jeweilige Ende 23 relativ zum Gehäuse 25 des Schwenklagers 18 in Querrichtung des Kinderwagens verschoben und zwar derart, daß der durch Führungsvorsprünge 42 im Gehäuse 25 des Schwenklagers 18 geführte Riegel 24 in die Rastaufnahme 39 hinein, oder aus dieser herausbewegbar ist. Befindet sich der Riegel 24 in einer "Freigabestellung" (Fig. 5), so können die Schwenkscheibe und der Achshalter 16 relativ zum Schwenklagergehäuse 25 in Richtung des Doppelpfeiles 43 verschwenkt werden. Befindet sich der Riegel 24 in der Rastaufnahme 39, d.h. in einer "Blockierstellung", so sind die Schwenkscheibe und der Achshalter 16 im Schwenklagergehäuse 25 blockiert. Die Räder des Kinderwagens befinden sich dann in einer Geradeaus-Stellung und können nicht verschwenkt werden.

Mit der oben beschriebenen Konstruktion, die ein Ausführungsbeispiel eines erfindungsgemäßen Kinderwagens darstellt, gelingt es auf einfache Art und Weise, sowohl den Auslenkwinkel der Räder zu beeinflussen, als auch die Wirkung eines rückstellenden Elements bei einer Auslenkung der Räder an einem Kinderwagen zu verwirklichen.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 11: vorderer Holm
- 12: hinterer Holm
- 13: Verbindungselement
- 14: Aufsatz
- 15: Vorderrad
- 16: Achshalter
- 17: Scheibe
- 18: Schwenklager
- 19: Koppelstab
- 20: Pedal
- 21: Betätigungsgestänge
- 22: Zunge
- 23: Ende des Betätigungsgestänges 21
- 24: Riegel
- 25: Schwenklagergehäuse
- 26: Schwenklageraufnahmeteil
- 27: Gehäuseoberteil
- 28: Deckel
- 29: Torsionsfeder
- 30: inneres Ende der Torsionsfeder 29
- 31: äußeres Ende der Torsionsfeder 29
- 32: Aussparung
- 33: Aussparung
- 34: Aussparung
- 35: Vorsprung
- 36: Achsbohrung
- 37: Vorsprung
- 38: Bohrung
- 39: Rastaufnahme
- 40: Schrägnut
- 41: Zapfen
- 42: Führungsvorsprung
- 43: Doppelpfeil

## Patentansprüche

1. Kinderwagen mit einem auf Rädern (15) verfahrbaren Rahmengestell (11, 12), wobei die vorderen und/oder hinteren Räder jeweils um eine vertikale Achse verschwenkbar gelagert sind, **dadurch gekennzeichnet, dass** die verschwenkbar gelagerten Räder (15) entgegen der Wirkung eines elastischen Rückstellelements, insbesondere einer Feder (29) aus einer Geradeaus-Stellung auslenkbar sind.

2. Kinderwagen nach Anspruch 1, **gekennzeichnet durch** ein Blockiermittel, **durch** das die verschwenkbar gelagerten Räder (15) in Geradeaus-Stellung blockierbar sind.

3. Kinderwagen nach Anspruch 1 oder 2, **gekennzeichnet durch** ein Einstellmittel, **durch** das der Auslenkwinkel der verschwenkbar gelagerten Räder (15) unterschiedlich einstellbar ist, und zwar entweder stufenweise oder stufenlos.

4. Kinderwagen nach Anspruch 3, **gekennzeichnet durch** einen Entkopplungsmechanismus, **durch** den die verschwenkbar gelagerten Räder (15) bei Bedarf vom elastischen Rückstellelement (29) entkoppelbar sind.

5. Kinderwagen nach Anspruch 3 oder 4, **dadurch gekennzeichnet, dass** die verschwenkbar gelagerten Räder (15) bei maximal eingestelltem Auslenkwinkel oder einer vorbestimmten Zwischenstellung desselben vom elastischen Rückstellelement (29) entkoppelt sind.

6. Kinderwagen nach einem der Ansprüche 1-5, **dadurch gekennzeichnet, dass** die vertikale Schwenkachse eines verschwenkbaren Rades eine Rastaufnahme (39) aufweist, in die bei vorbestimmter Schwenkstellung bzw. Auslenkung, insbesondere bei Geradeaus-Stellung des Rades ein Verriegelungselement (24) eingreifbar ist, wobei das Verriegelungselement (24) z.B. über ein Betätigungsgestänge (21) mit einem Betätigungsorgan (z.B. Kipphebel, Pedal (20)) gekoppelt ist.

7. Kinderwagen nach einem der Ansprüche 1-6, **dadurch gekennzeichnet, dass** das Schwenklager (18) eines verschwenkbar gelagerten Rades ein Gehäuse (25) und eine darin um eine vertikale Achse drehbar gelagerte Scheibe aufweist.

8. Kinderwagen nach Anspruch 7, **dadurch gekennzeichnet, dass** mit der drehbar gelagerten Scheibe ein sich radial nach außen, insbesondere im montierten Zustand sich in Kinderwagenlängsrichtung erstreckender Achshalter (16) verbunden ist.

9. Kinderwagen nach einem der Ansprüche 6-8, **dadurch gekennzeichnet, dass** das Gehäuse (25) eine Führung, insbesondere Radialführung für das Verriegelungselement (24) umfasst.

10. Kinderwagen nach einem der Ansprüche 6-9, **dadurch gekennzeichnet, dass** das Verriegelungselement (24) ein relativ zur vertikalen Schwenkachse eines verschwenkbar gelagerten Rades in radialer Richtung hin- und herschiebbarer Riegel ist.

11. Kinderwagen nach einem der Ansprüche 6-10, **dadurch gekennzeichnet, dass** die Rastaufnahme (39) Teil der drehbar gelagerten Scheibe ist.

12. Kinderwagen nach einem der Ansprüche 1-11, **dadurch gekennzeichnet, dass** die verschwenkbar gelagerten Vorder- und/oder Hinterräder durch einen Koppelstab (19) miteinander verbunden sind, so dass das jeweilige Räderpaar synchron verschwenkbar ist.

13. Kinderwagen nach Anspruch 12, **dadurch gekennzeichnet, dass** der Koppelstab (19) mit den Achshaltern (16) der verschwenkbar gelagerten Vorder-und/oder Hinterräder verbunden ist.

14. Kinderwagen nach einem der Ansprüche 8-13, **dadurch gekennzeichnet, dass** am Achshalter (16) die jeweilige Radachse befestigt ist.

15. Kinderwagen nach einem der Ansprüche 6-14, **dadurch gekennzeichnet, dass** das Verriegelungselement (24) eine Aufnahme für einen am Betätigungsgestänge (21) angeordneten Zapfen (41) aufweist, die vorzugsweise als Schrägnut (40) ausgebildet ist.

16. Kinderwagen nach Anspruch 15, **dadurch gekennzeichnet, dass** die Schrägnuten der Verriegelungselemente (24) für ein Räderpaar bzw. die Räder einer Achse relativ zur Wagenlängsachse gespiegelt sind.

## Claims

1. A pram fitted with a rack (11, 12) mobile on wheels (15),wherein all the front and/or rear wheels are mounted to swivel around a vertical axis, **characterised in that** the wheels (15) mounted to swivel can be deflected from an extended position to counteract the action of an elastic return element, in particular a spring (29).

2. A pram according to claim 1, **characterised by** a blocking means, through which the wheels (15) mounted to swivel can be blocked in extended position.

3. A pram according to claim 1 or 2, **characterised by** an adjusting means, through which the deflection angle of the wheels (15) mounted pivotally is adjustable in various ways, and more precisely either gradually or continuously.

4. A pram according to claim 3, **characterised by** a decoupling mechanism, through which the wheels (15) mounted pivotally can be decoupled from the elastic return element (29) if required.

5. A pram according to claim 3 or 4, **characterised in that** the wheels (15) mounted pivotally are decoupled from the elastic return element (29) in the presence of a deflection angle adjusted to its maximal value or of a predetermined intermediate position.

6. A pram according to one of the claims 1 to 5, **characterised in that** the vertical pivot axis of a swivelling wheel presents a locking recess (39), in which a locking element (24) can engage in case of a predetermined pivoting position respectively deflection, in particular in case of an extended position of the wheel, wherein the locking element (24) is coupled for instance via an actuating linkage (21) fitted with an actuation member (for example a tilting lever, a pedal (20)).

7. A pram according to one of the claims 1 to 6, **characterised in that** the swivel bearing (18) of a pivotally mounted wheel presents a housing (25) and a disc mounted rotatably around a vertical axis therein.

8. A pram according to claim 7, **characterised in that** an axle retainer (16) extending radially and outwardly, in particular in the longitudinal direction of the pram in installed condition, is connected to the rotatably mounted disc.

9. A pram according to one of the claims 6-8, **characterised in that** the housing (25) includes a guiding means, in particular a radial guiding means for the locking element (24).

10. A pram according to one of the claims 6-9, **characterised in that** the locking element (24) is a lock which can be moved back and forth in radial direction with respect to the vertical pivot axis of a pivotally mounted wheel.

11. A pram according to one of the claims 6-10, **characterised in that** the locking recess (39) is part of the rotatably mounted disc.

12. A pram according to one of the claims 1-11, **characterised in that** the pivotally mounted front and/or rear wheels are connected to each other through a coupling member (19), so that the respective pair of wheels can be swivelled synchronously.

13. A pram according to claim 12, **characterised in that** the coupling member (19) is connected to the axle retainers (16) of the pivotally mounted front and/or rear wheels.

14. A pram according to one of the claims 8-13, **characterised in that** the respective wheel axle fastened to axle retainer (16).

15. A pram according to one of the claims 6-14, **characterised in that** the locking element (24) presents a seat for a journal (41) arranged on the actuating linkage (21), which is preferably designed as an oblique groove (40).

16. A pram according to claim 15, **characterised in that** the oblique grooves of the locking elements (24) are mirrored for a pair of wheels respectively the wheels of an axle with respect to the longitudinal axis of the carriage.

## Revendications

1. Poussette pourvue d'un châssis (11, 12) mobile sur roues, dans laquelle les rues avant et/ou arrière sont chacunes montées pivotantes par rapport à un axe vertical, **caractérisée en ce que** les roues montées pivotantes (15) sont escamotables pour s'opposer à l'action d'un élément de rappel élastique, en particulier un ressort (29) à partir d'une position déployée.

2. Poussette selon la revendication 1, **caractérisée par** un moyen de blocage, permettant de bloquer les roues montées pivotantes (15) en position déployée.

3. Poussette selon la revendication 1 ou 2, **caractérisée par** un moyen de réglage, permettant de régler l'angle de déviation des roues montées pivotantes (15) de manière différente, et ce par étapes ou en continu.

4. Poussette selon la revendication 3, **caractérisée par** un mécanisme de débrayage permettant de dégager en cas de besoin les roues montées pivotantes (15) de l'élément de rappel élastique (29).

5. Poussette selon la revendication 3 ou 4, **caractérisée en ce que** les roues montées pivotantes (15) sont dégagées de l'élément de rappel élastique (29) en présence d'un angle de déviation maximal défini ou d'une position intermédiaire prédéterminée de celui-ci.

6. Poussette selon l'une des revendications 1-5, **caractérisée en ce que** l'essieu pivotant vertical d'une roue pivotante présente un logement d'encliquetage (39), dans lequel peut s'engrener un élément de verrouillage (24) en présence d'une position pivotante ou d'une déviation prédéterminée, en particulier une position déployée de la roue, tandis que l'élément de verrouillage (24) est embrayé par exemple par le biais d'une tige actionnement (21) pourvue d'un organe d'actionnement (comme un levier d'inclinaison, une pédale (20)).

7. Poussette selon l'une des revendications 1-6, **caractérisée en ce que** le palier pivotant (18) d'une roue montée pivotante présente un logement (25) et un disque monté rotatif autour d'un axe vertical.

8. Poussette selon la revendication 7, **caractérisée en ce qu'**un porte-essieu (16) s'étendant radialement vers l'extérieur, dans la direction longitudinale de la poussette en particulier une fois monté, est solidaire du disque monté rotatif.

9. Poussette selon l'une des revendications 6-8, **caractérisée en ce que** le logement (25) comprend un système de guidage, en particulier un système de guidage radial pour l'élément de verrouillage (24).

10. Poussette selon l'une des revendications 6-9, **caractérisée en ce que** l'élément de verrouillage (24) est un verrou que l'on peut rentrer et sortir dans la direction radiale par rapport à l'essieu pivotant vertical d'une roue montée pivotante.

11. Poussette selon l'une des revendications 6-10, **caractérisée en ce que** le logement d'encliquetage (39) fait partie du disque monté rotatif.

12. Poussette selon l'une des revendications 1-11, **caractérisée en ce que** les roues avant et/ou arrière montées pivotantes sont reliées les unes aux autres par le biais d'une barre d'accouplement (19), de telle sorte que la paire de roues correspondant peut pivoter de manière synchrone.

13. Poussette selon la revendication 12, **caractérisée en ce que** la barre d'accouplement (19) est solidaire des porte-essieux (16) des roues avant et/ou arrière montées pivotantes.

14. Poussette selon l'une des revendications 8-13, **caractérisée en ce que** l'essieu de roue correspondant est fixé au niveau du porte-essieu (16).

15. Poussette selon l'une des revendications 6-14, **caractérisée en ce que** l'élément de verrouillage (24) présente un logement pour tenon (41) situé sur la tige actionnement (21), de préférence conçue comme rainure oblique (40).

16. Poussette selon la revendication 15, **caractérisée en ce que** les rainures obliques des éléments de verrouillage (24) sont montées symétriquement pour une paire de roues ou les roues d'un essieu par rapport à l'axe longitudinal de la voiture.
